# EUROPEAN PATENT SPECIFICATION

(11) **EP 4 387 814 B1**
(45) Date of publication and mention of the grant of the patent: **04.06.2025**
(21) Application number: 22768332.3
(22) Date of filing: 18.08.2022
(51) Int. Cl.: B25J 9/00

(54) **UNDER-ACTUATED SOFT EXOSKELETON WITH CABLE ACTUATION SYSTEM FOR UPPER LIMB ASSISTANCE**
UNTERBETÄTIGTES WEICHES EXOSKELETT MIT KABELBETÄTIGUNGSSYSTEM ZUR UNTERSTÜTZUNG DER OBEREN GLIEDMASSEN
EXOSQUELETTE SOUPLE SOUS-ACTIONNÉ DOTÉ D'UN SYSTÈME D'ACTIONNEMENT PAR CÂBLES POUR ASSISTANCE DE MEMBRE SUPÉRIEUR

(30) Priority: 19.08.2021 IT 202100022091
(43) Date of publication of application: 26.06.2024
(73) Proprietor: ETA BIOENGINEERING S.R.L., 80053 Castellammare di Stabia (NA) (IT)
(72) Inventor: STANISLAO, Grazioso, 80053 Castellammare di Stabia (NA) (IT); PANARIELLO, Dario, 63079 Colli del Tronto (AP) (IT); CAPORASO, Teodorico, 82100 Benevento (IT); PALOMBA, Angela, 80054 Gragnano (NA) (IT); GRAZIOSO, Anna, 80053 Castellammare di Stabia (NA) (IT); CAPORASO, Michele, 82100 Benevento (IT); DI GIRONIMO, Giuseppe, 80127 Napoli (IT); LANZOTTI, Antonio, 80131 Napoli (IT)
(74) Representative: Cardelli, Guido
(86) International application number: PCT/EP2022/073125
(87) International publication number: WO 2023/021159

(56) References cited:
- WO-A1-2017/026943
- WO-A1-2019/161232
- US-A1- 2020 121 478

## Description

### Field of application

The present invention relates to a system of the type a soft exoskeleton comprising components of the mechanical and electronic type for aiding the movements of the upper limbs.

Specifically, the system is a soft exoskeleton for the upper limbs comprising cables for aiding the movements of the upper limbs.

In particular, the system is specifically adapted to assist the upper limbs and to prevent musculoskeletal disorders resulting from strenuous work activities.

### Prior art

Exoskeletons are wearable mechanical structures that increase the potential of the human musculoskeletal system.

Exoskeletons can be divided into two types: the rigid exoskeletons that transmit forces from the robot to the human being through rigid connections, precisely, and the so-called "soft" exoskeletons.

The latter can in turn be divided into two types depending on the technology used for the transmission of forces, i.e. cable systems or systems with pneumatic actuators.

The upper limb consists of three main joints: shoulder, elbow and wrist joint. The shoulder joint is the most complex joint in terms of the variety of movements allowed and connects the humerus with the shoulder. The shoulder joint can be schematised as a coupling having three degrees of freedom (or DOF), or a spherical joint, simulating the movements of the glenohumeral. The three movements are defined as: extension-bending of the shoulder, shoulder abduction-adduction and shoulder rotation.

The elbow is a synovial joint between the humerus, in the upper part of the arm, and the radius and ulna, in the forearm. The joint of the elbow can be schematised as a coupling having only one degree of freedom, i.e. simple hinge coupling. The movement is defined as extension-bending of the elbow.

Soft exoskeletons are mainly characterised by: (i) a so-called "soft suit", which allows the correct positioning of the anchorage points of the pneumatic actuators or of the cables, also called tendons, on the body of the subject; (ii) a force transmission system, including anchorage elements, of the pneumatic actuators and of the cables (or tendons) that guarantee the execution of the correct movement to be assisted; and (iii) an exoskeleton actuation system that is a compressor with relative valves for pneumatic system and an electric motor with relative gears for a system with cables.

In particular, the correct execution of the required movements is guaranteed by an appropriate positioning of the anchorage points of the pneumatic actuators or of the cables on the subject's body. The positions of the anchorage points are not standard and may change.

However, some common characteristics are: (i) the shoulder movements are performed by positioning the anchorage points on the torso, on the upper part of the back, on the shoulder itself, and on the upper part of the arm; (ii) the elbow movement is performed by positioning the anchorage points on the upper part of the arm and on the forearm.

In most known exoskeletons, two anchorage points allow the movements to be executed in one direction, that is, they allow only one degree of freedom (DOF): this type of exoskeletons are called "fullactuated" since for each DOF they use an actuator.

Wearable robots are also known in which at least one actuator can assist more than one degree of freedom (DOF): this type of exoskeletons are defined as "under-actuated".

In particular, the publication by Kim, Y.G., Little, K., Noronha, B., Xiloyannis, M., Masia, L., Accoto, D. entitled "A voice activated biarticular exosuit for upper limb assistance during lifting tasks", Robotics and Computer-Integrated Manufacturing 66, 101995 (2020) discloses a mechanical solution for performing shoulder and bending of the elbow movements.

The under-actuated exoskeleton by Kim, Y.G. et al. assists two defined degrees of freedom: bending of the shoulder and bending of the elbow.

The exoskeleton in question comprises the following elements: (i) an exosuit that is however composed of a rigid structure positioned on the upper part of the back and a rigid brace, provided with a hinge at the anatomical joint of the elbow, which allows the bending of the joint itself; (ii) a tendon-type force transmission system, i.e. Bowden cables, and consists of a single cable directed by means of three anchorage points (the first positioned on the upper part of the shoulder, the second at the biceps and the third at the forearm); (iii) a device actuation system, composed of an electric motor that allows the cable to be tensioned.

In particular, the authors of the publication by Kim, Y.G. et al. propose the use of a single motor to actuate two degrees of freedom, i.e. shoulder and bending of the elbow, according to the following mechanism: initially, by tensioning the transmission cable one assists only the bending of the worker's elbow, once the angle of bending of the elbow reaches 90 degrees the elbow joint is blocked, the motor by continuing to tension the cable assists the bending of the shoulder.

Therefore, the system described by Kim, Y.G. et al., in addition to comprising an exosuit composed of a rigid structure, does not allow the shoulder to be bent without initially having bent the elbow up to 90 degrees, namely it allows only the movement of bending of the elbow to be assisted first and only subsequently that of the shoulder.

International patent application WO2017/026943 A1 discloses an exoskeleton for assisting the movements of a limb comprising an upper segment and a lower segment which are rotatably connected by a joint, wherein the exoskeleton comprises a rotatable spool, a first cable having a part of the cable wound around a first portion of the spool, the first cable terminating on the front part of the first segment of the limb to cause the bending thereof when the first cable is wound around the spool during the rotation thereof in a first direction, as well as a second cable having a part of the cable wound around a second portion of the spool, the second cable terminating on the rear part of the first segment of the limb to cause the extension thereof when the second cable is wound around the spool during the rotation thereof in a second direction.

The first and second cables are in this case Bowden cables and both terminate at this joint, where - anteriorly and posteriorly in a corresponding manner - there are two elastic elements, such as elastic springs, arranged in series with this first and second cable.

The elastic elements are coordinated with a first and a second effector that are positioned at the lower segment of the limb, so as to transmit the movement of the first or, alternatively, of the second Bowden cable to the front part or to the rear part of the lower segment of the limb, respectively.

The exoskeleton described in WO2017/026943 A1 therefore leads to a relative advantage in optimising the components required for the assistance of the wearer.

However, the actuation mechanism by means of Bowden cables of the exoskeleton subject matter of WO2017/026943 A1 results in a facilitation of the movement of extension or bending of the limb in question such that the wearer is assisted in the extension or in the bending of the lower segment of the limb only when simultaneously assisted in the extension or in the bending, respectively, of the upper segment of the same limb.

In addition, the mechanism for movement transmission through Bowden cables of the exoskeleton subject matter of WO2017/026943 A1 does not allow numerous combinations of movements; for example, in an exoskeleton that provides for the aid for extension and bending movements for both the upper segment and the lower segment of the patient, the extension of the lower segment of the limb is prevented if the upper segment of the limb is at rest and vice versa: the less the bending of the lower segment of the limb is allowed during the extension of the upper segment of the same limb and vice versa.

Ultimately, the need to provide an exoskeleton that is as functional as possible in its ability to assist the greatest number of movements without, however, limiting the assistance capacity of the system itself, i.e. assisting the greatest number of joints, especially those of the upper limbs, remains particularly felt in the sector.

In particular, there is a need for the provision of a system that simultaneously assists the bending of the shoulder and of the elbow, specifically a soft exoskeleton suitable for industrial applications, i.e., handling and manipulation of industrial tools, and that is free of the problems illustrated above with reference to the prior art.

The technical problem underlying the present invention is therefore that of setting up a soft exoskeleton for the assistance of the limbs, especially of the upper limbs, characterized by a high functionality, i.e. that is capable of providing aid to the wearer for a high number of movements in relation to several joints, in particular that can simultaneously assist the bending of the shoulder joint and of the elbow joint and at the same time does not prevent natural movements of the other joints of the upper limbs.

### Summary of the invention

This technical problem is solved, according to the present invention, by a soft exoskeleton for assisting the movement of at least one limb of a user, in particular an upper limb, such at least one limb comprising a proximal portion and a distal portion which are connected by a joint, wherein the soft exoskeleton comprises
a soft suit, which is adapted to be worn by the user on said at least one limb,
a plurality of sensors, which is configured to measure a movement of said at least one limb;
an actuation system powered by an electric motor and comprising
   - said electric motor comprising a main shaft,
   - a first lateral shaft and a second lateral shaft;
   - a first spool rotatable in a first direction and in a second direction, connected to said first lateral shaft in such a way as to be rotated by said first lateral shaft;
   - a second spool rotatable in a first direction and in a second direction and connected to said second lateral shaft in such a way as to be rotated by said second lateral shaft;
   - a first primary gearwheel for motion transmission for supporting a first joint and into which said main shaft is inserted;
   - a second primary gearwheel for motion transmission for supporting a second joint and into which said main shaft is inserted;
   - a first secondary gearwheel for motion transmission for supporting a first joint and constrained to rotate together with said first lateral shaft, said first primary gearwheel being meshed with said first secondary gearwheel;
   - a second secondary gearwheel for motion transmission for supporting a second joint and constrained to rotate together with said second lateral shaft, said second primary gearwheel being meshed with said second secondary gearwheel;
   - a gearbox mechanism adapted to allow, in an automatic way, motion transmission from said main shaft to said first lateral shaft, by engagement of said first primary gearwheel with said first secondary gearwheel and/or motion transmission from said main shaft to said second lateral shaft, by engagement of said second primary gearwheel with said second secondary gearwheel;
and wherein the soft exoskeleton further comprises a transmission system, anchored to said soft suit and connected to said actuation system, comprising:
- a first cable having a portion of the first cable wound around the first rotatable spool, the first cable extending from the first rotatable spool along said soft suit and being adapted to assist the movement of bending said proximal portion of the limb when said first cable is wound around the first rotatable spool during the rotation of the first rotatable spool in a first direction;
- a second cable having a portion of the second cable wound around the second rotatable spool, the second cable extending from the second rotatable spool along said soft suit and being adapted to assist the movement of bending of said distal portion of the limb when the second cable is wound around the second rotatable spool during the rotation of the second rotatable spool in a first direction.

Preferably, such at least one limb of the user is an upper limb.

In particular, such at least one limb may be the right arm or the left arm of the user, such distal portion being the forearm and such proximal portion being the upper part of the arm comprised between the elbow and the shoulder.

Advantageously, therefore, when such at least one limb is an upper limb, the actuation system included in the soft exoskeleton according to the present invention is able to assist both the movement of bending of the shoulder and the movement of bending of the elbow.

In particular, the distinctive feature of the soft exoskeleton according to the present invention relates to the possibility of actuating two degrees of freedom (bending of the shoulder and bending of the elbow) using a single motor; the soft exoskeleton according to the present invention is thus a so-called under-actuated system.

In other words, the soft exoskeleton according to the present invention effectively solves the aforementioned technical problem, by providing aid to the wearer for a high number of movements in relation to several joints with the aid of a single motor.

Consistently, as will also be seen in relation to the embodiments described below, in its structural and operation peculiarities, the soft exoskeleton according to the present invention presents in any case a simplified complexity of operation, especially in relation to the components assigned to the actuation of the system, both from the point of view of the overall size and weight of the system, comprising - as mentioned - a single motor.

In an advantageous way, according to one of its application modes, this soft exoskeleton allows to assist, individually or simultaneously, the bending of the shoulder and the bending of the elbow during industrial operations referred to as "overhead tasks" and "lifting tasks".

The need to preform both the bending of the shoulder and the bending of the elbow simultaneously is dictated by biomechanical considerations regarding the aforesaid movements ("overhead task" and "lifting task") that typically involve both bendings simultaneously. This need is an important condition for the setting up an exoskeleton that naturally assists human movements.

Within the meaning of the present invention, the robot according to the present invention belongs to the category of exoskeletons referred to as "soft" in that it uses flexible members for motion transmission and the mechanical support structure, i.e. the aforementioned soft suit, is also essentially made of flexible structures.

Specifically, the term "soft exoskeleton" refers to an exoskeleton without rigid structures such as rigid joints or arms (i.e. rigid links), and in particular without rigid structures both in the mechanical support part (i.e. in the soft suit mentioned above) and in the transmission system mentioned above, i.e. in the part of the exoskeleton intended for the transmission of the forces from the robotic system to the human being.

In other words, the soft exoskeleton according to the invention is realised with soft robotic technologies, i.e. it does not include rigid joints and arms, but it comprises light and flexible structures for assisting the limbs.

Within the meaning of the present invention, the term "soft suit" refers to a flexible suit, specifically a garment to be worn on the chest and on the upper limbs, made of a flexible structure, wherein said flexible structure comprises a base shirt or mesh, for example a basic shirt made of neoprene, as well as anchorage means, braces and joining bands.

In particular, this exosuit is compatible with the measurements and the shapes of the human subject and is provided with anchorage means for the cables of the transmission system; this basic shirt is made of a lightweight and breathable material, as will be seen below.

Preferably, in such a transmission system, said first cable and said second cable are Bowden cables.

More preferably, the soft exoskeleton according to the present invention also comprises a first Bowden sheath and a second Bowden sheath, wherein said first Bowden cable and said second Bowden cable extend along said soft suit within said first Bowden sheath and within said second Bowden sheath, respectively.

In an equally preferred way, a first portion of the first cable is wound around the first rotatable spool, said first portion of the first cable being able to assist the movement of bending of said proximal portion of the limb when said first portion of the first cable is wound around the first rotatable spool during the rotation of the first rotatable spool in the aforementioned first direction of the first rotatable spool, and/or a first portion of the second cable is wound around the second rotatable spool, said first portion of the second cable being able to assist the movement of bending of said distal portion of the limb when said first portion of the second cable is wound around the second rotatable spool during the rotation of the second rotatable spool of the aforementioned first direction of the second rotatable spool.

Preferably, said first cable, in particular said first Bowden cable, is anchored to the soft suit by anchorage means, placed at least at one first anchorage point, and said second cable, in particular said second Bowden cable, is anchored to the soft suit by anchorage means, placed at least at one second anchorage point, said at least one first anchorage point being in a position other than that said at least one second anchorage point.

More preferably, the first cable is anchored to the soft suit in such a way as to extend along the user's anterior deltoid and the second cable is anchored to the soft suit in such a way as to extend along the user's biceps brachii.

Even more preferably, the first cable is arranged on the soft suit in such a way to follow the path of the tension line of the anterior deltoid.

Advantageously, the bending of the shoulder joint is thus particularly efficiently assisted.

Consistently, the second cable is arranged on the soft suit in such a way as to follow the path of the tension line of the biceps brachii.

Advantageously, the bending of the elbow joint is thus particularly efficiently assisted.

Specifically, within the meaning of the present invention, the expression "tension lines" means lines joining the points of attachment of the muscle to the bone (i.e. tendon insertion), a muscle that allows the movement of the joint, such as the anterior deltoid muscle for the movement of bending of the shoulder or the biceps brachii muscle for the movement of bending of the elbow.

In particular, as will be better seen later in connection with the detailed description and the figures, thanks to such anchorage means, appropriately arranged on the soft suit in question, the cables can thus follow the path of the tension line described above.

According to a preferred embodiment of the present soft exoskeleton, when said at least one limb of the user is an upper limb, the aforementioned soft suit may comprise a shoulder brace, a first arm brace, configured to be positioned at the upper part of the user's arm, a second arm brace, configured to be positioned at the user's forearm, and a wrist brace.

Preferably, the aforementioned anchorage means are positioned on said shoulder brace, on said first arm brace and on said second arm brace.

More preferably, the aforementioned braces are made of a flexible material, even more preferably of neoprene.

Advantageously, this material allows the braces to adapt to the shapes of the human body and at the same time it must allow adequate rigidity for the transfer of forces from the aforesaid cables to the anatomical joints.

In particular, the shoulder brace is configured to be positioned around the shoulder of interest and comprises a shoulder brace band configured to wrap the user's chest.

In particular, said first arm brace is configured to be positioned at the upper part of the user's arm, that is between the elbow and the shoulder.

In particular, said second arm brace is configured to be positioned at the user's forearm, that is between the wrist and the elbow.

In particular, said wrist brace comprises a wrist brace band configured to wrap the thumb around the palm of the hand and the upper part of the thumb itself.

Even more preferably, the aforementioned shoulder brace, first arm brace, second arm brace and wrist brace comprise closing means.

In a completely preferred way, these closing means are in the form of a hook and loop closing system (i.e. in a Velcro^{®} type closing system).

Advantageously, this hook-and-loop closing system allows the corresponding brace to be adapted to different types of users with different anthropometric characteristics.

Preferably, the aforementioned soft suit may also comprise a plurality of joining bands capable of connecting the aforementioned shoulder brace, first arm brace, second arm brace and wrist brace.

More preferably, such joining bands may comprise adjustment means, said adjustment means being adapted to increase or decrease the distance between adjacent braces.

Even more preferably, said adjustment means are in the form of a buckle, in a completely preferred way a buckle made of plastic material.

In a most preferably way, such joining bands are made of a flexible material, in a completely preferred way of nylon.

Advantageously, such joining bands allow to keep the braces and, therefore, the anchorage means in predefined positions.

In particular, thanks to such joining bands, when the respective anchorage means are tensioned through the respective cables, the first arm brace and the second arm brace are prevented from moving in a distal direction or in a proximal direction during the use of the present soft exoskeleton. The anchorage means are thus maintained in predefined positions.

According to a particular form of the soft exoskeleton of the present invention, the soft suit may comprise a basic shirt.

In particular, such a basic shirt can be conformed as a t-shirt, more specifically a long-sleeved shirt.

More particularly, this t-shirt is conformed as a t-shirt designed to adhere to the user's body.

According to a preferred embodiment thereof, the soft exoskeleton actuation system according to the present invention comprises sliding and guide means for said first cable and for said second cable, said sliding and guide means being adapted to keep said first cable and said second cable under tension and to prevent said first cable and said second cable from unwinding (or unrolling) from the first rotatable spool and from the second rotatable spool, respectively.

According to a preferred embodiment thereof, as will be seen in more detail with reference to the detailed description and the figures, in the soft exoskeleton actuation system according to the present invention said first primary gearwheel and such a first secondary gearwheel have a transmission ratio equal to 1:3.

Advantageously, this specific transmission ratio between the first primary gearwheel and the first secondary gearwheel makes it possible to multiply the torque generated by the main shaft and provide the required torque to the shoulder. In fact, bending the shoulder requires more torque than bending the elbow.

In an equally preferred way, as will be seen in more detail with reference to the detailed description and the figures, in the soft exoskeleton actuation system according to the present invention such second primary gearwheel and such second secondary gearwheel have a transmission ratio equal to 1:1.

Preferably, the soft exoskeleton according to the present invention further comprises a control unit, said control unit being configured to send one command or a plurality of commands to said actuation system as a function of one signal or a plurality of signals coming from said plurality of sensors, said signal or plurality of signals concerning a movement of said at least one limb.

More preferably, said control unit is configured to send said command and/or said plurality of commands to the electric motor and to said gearbox mechanism.

Preferably, said gearbox mechanism comprises at least one pin, longitudinally and freely slidable on the aforementioned main shaft along a sliding path and being adapted to allow motion transmission from said main shaft to said first lateral shaft, by the engagement of said first primary gearwheel with said main shaft, and/or motion transmission from said main shaft to said second lateral shaft, by engagement of said second primary gearwheel with said main shaft.

More preferably, said pin is adapted to allow the first primary gearwheel and/or the second primary gearwheel to be selectively engaged with said main shaft by sliding on said main shaft along said sliding path.

Even more preferably, this pin has a length equal to at least the distance between the first primary gearwheel and the second primary gearwheel added to the thickness of the first primary gearwheel and the second primary gearwheel.

In a completely preferred way, the pin is suitable for sliding longitudinally and freely within a housing made in the aforementioned main shaft along this sliding path.

In particular, this housing can be conformed as a slot made longitudinally in the aforementioned main shaft.

According to a first preferred embodiment of the present soft exoskeleton, such a gearbox mechanism comprises at least one electromagnet, adapted to be activated or deactivated by said command or by said plurality of commands sent by said control unit, said at least one electromagnet being configured to exert an electromagnetic force on said pin.

As mentioned, said command or said plurality of commands are sent from the control unit as a function of a signal or a plurality of signals coming from said plurality of sensors, said signal or plurality of signals concerning a movement of said at least one limb.

Advantageously, by exerting an electromagnetic force on said pin and causing the movement thereof along said sliding path, said electromagnet allows motion transmission from said main shaft to said first lateral shaft.

More preferably, according to such a first preferred embodiment, the gearbox mechanism comprises one polarity reverser, said polarity reverser being configured to cause a reversal of the polarity of the electromagnetic force generated by the electromagnet.

Preferably, in accordance with this first embodiment, said pin is adapted to take the following positions along said sliding path:
- a first position, wherein said pin allows the first primary gearwheel and the second primary gearwheel to be engaged with said main shaft, the electromagnet being deactivated and not exerting an electromagnetic force on the pin;
- a second position, wherein said pin allows the first primary gearwheel to be engaged with said main shaft, the electromagnet being activated and exerting on the pin an electromagnetic force with a first polarity; and
- a third position, wherein said pin allows the second primary gearwheel to be engaged with said main shaft, the electromagnet being activated and exerting on the pin an electromagnetic force with a polarity of opposite sign compared to said first polarity.

According to this first embodiment of the present soft exoskeleton, the gearbox mechanism is thus advantageously configured to allow motion transmission from said main shaft to said first lateral shaft, through the aforementioned pin in a first position or in a second position according to which the first primary wheel is engaged with said main shaft, the first primary gearwheel and the first secondary gearwheel being meshed to each other, and/or motion transmission from said main shaft to said second lateral shaft, through the aforementioned pin in a first position or in a third position according to which the second primary wheel is engaged with said main shaft, the second primary gearwheel and the second secondary gearwheel being meshed to each other.

Alternatively, in accordance with a second particular embodiment of the present invention, such a gearbox mechanism comprises a spring system, suitable for being activated or deactivated by a command or by a plurality of commands sent by the control unit, said spring system being configured to exert an electromagnetic force on said pin.

As mentioned, said command or said plurality of commands are sent from the control unit as a function of a signal or a plurality of signals coming from said plurality of sensors, said signal or plurality of signals concerning a movement of said at least one limb.

Advantageously, by exerting an elastic recall force on such a pin and causing the movement thereof along said sliding path, said spring system indirectly allows motion transmission from said main shaft to said first lateral shaft and/or to said second lateral shaft.

Preferably, in accordance with this second embodiment, said pin is adapted to take the following positions along said sliding path:
- a first position, wherein said pin allows the first primary gearwheel and the second primary gearwheel to be engaged with said main shaft, the spring system being deactivated and not exerting an elastic recall force on the pin;
- a second position, wherein said pin allows the first primary gearwheel to be engaged with said main shaft, the spring system being activated and exerting on the pin an elastic recall force in a first direction along said sliding path; and
- a third position, wherein said pin allows the second primary gearwheel to be engaged with said main shaft, the spring system being activated and exerting on the pin an elastic recall force in a second direction along said sliding path, said second direction being opposite to the first direction.

Advantageously, the motion transmission from the main shaft to the first secondary gearwheel and/or to the second primary secondary gearwheel is thus allowed with the first secondary gearwheel and, thus, the movements of bending of this proximal portion of a limb, in particular of an upper limb and therefore of the shoulder joint and - at the same time or alternatively - the movements of bending of this distal portion of a limb, in particular of an upper limb and therefore of the elbow joint can be effectively assisted.

As mentioned, the aforementioned control unit is configured to send a command or a plurality of commands to said gearbox mechanism, in particular said gearbox mechanism comprising an electromagnet or a spring system, said gearbox mechanism being activated or deactivated by said command and/or by the plurality of commands coming from the control unit.

In accordance with an alternative embodiment of the present invention, said the gearbox mechanism preferably comprises a first clutch to allow the motion transmission from the main shaft to the first lateral shaft, by engagement of the first primary gearwheel with the main shaft, and a second clutch to allow the motion transmission from the main shaft to the second lateral shaft, by engagement of the second primary gearwheel with the main shaft.

More preferably, said first clutch and said second clutch may be electromagnetically actuated, wherein the first clutch is adapted to transmit the motion of the main shaft to the first lateral shaft when is electromagnetically activated and the second clutch is adapted to transmit the motion of the main shaft to the second lateral shaft when is electromagnetically activated.

More preferably, the first clutch and the second clutch may be of the magnetorheological type.

Even more preferably, the first clutch comprises a first chamber filled with a magnetic fluid and the second clutch comprises a second main chamber filled with magnetic fluid.

Advantageously, when the first clutch and the second clutch are of the magnetorheological type, the torque transmission from the main shaft to the first lateral shaft and/or to the second lateral shaft can be controlled in a continuous way.

Preferably, the soft exoskeleton according to the present invention further comprises means for keeping said first cable and said second cable pre-tensioned.

Advantageously, thanks to the aforementioned means for keeping said first cable and said second cable pre-tensioned, said first cable and said second cable may be always taken pre-tensioned and cable slack phenomena can be avoided.

Preferably, the soft exoskeleton according to the present invention comprises an encoder, more preferably an absolute encoder, wherein said encoder is adapted to measure the angular position of the main shaft of the aforementioned electric motor.

More preferably, the control unit is configured to record the position of the main shaft of the electric motor, as measured by the aforementioned encoder, and for comparing it with the position of said at least one limb (measured by the aforementioned plurality of sensors, in particular by means of "IMU sensors", as will be seen below) in such a way that at each degree of bending of the shoulder and/or of the elbow an appropriate tension and, therefore, an appropriate tension force of the cables is ensured.

Preferably, said plurality of sensors is configured to measure a movement of said at least one limb comprises at least one sensor configured to measure at least one of directional movement of the limb, acceleration of the proximal portion of the limb, acceleration of the distal portion of the limb, orientation of the proximal portion of the limb, orientation of the distal portion of the limb to provide quantitative information to said control unit in the form of a signal or a plurality of signals.

Advantageously, thanks to such a plurality of sensors in collaboration with the control unit and the actuation system, the soft exoskeleton according to the present invention makes it possible to detect the intention to perform a movement or a combination of movements by the user and to assist the user during the execution of such movement or combination of movements, by controlling the state of activation of such a gearbox mechanism and causing the possible activation of the electric motor.

More preferably, such a plurality of sensors configured to measure a movement of such at least one limb comprises inertial sensors and/or goniometers.

Alternatively, such a plurality of sensors is configured to measure a movement of such at least one limb comprises IMU sensors.

In particular, within the meaning of the present invention, the term "IMU sensors" refers to so-called Inertial Measurement Units or electronic devices that measure and detect acceleration, angular speeds and possibly other types of forces and comprise accelerometers, gyroscopes and tri-axial magnetometers.

Even more preferably, for example when said at least one limb of the user is an upper limb and said plurality of sensors configured to measure a movement of said at least one limb comprising IMU sensors, said sensors are positioned on said soft suit at one or more of the following points where contact with the user is envisaged: at the chest in proximity to the collarbone, at the biceps in proximity to the mass centre of the same and at the forearm at wrist level.

In addition, according to a particular embodiment, the present soft exoskeleton may comprise at least one force sensor configured to measure the amount of force applied to the first cable and to the second cable in order to provide a feedback to such a control unit.

The characteristics and advantages of the exoskeleton according to the invention will become clear from the description, made below, of an example of its embodiment given by way of non-limiting example with reference to the attached drawings.

### Brief description of the drawings

Figure 1 schematically represents an overview of the soft exoskeleton according to the present invention according to a side view of a user wearing it.
Figure 2 illustrates an overview of the actuation system, according to a side view thereof.
Figure 3 shows the mechanism of operation of the gearbox mechanism of the actuation system, according to a preferred embodiment of the present soft exoskeleton.
Figure 4 and Figure 5 schematically show an overview of the soft exoskeleton referred to in Figure 1 according to an anterior (abdominal) and posterior (dorsal) view, respectively.
Figure 6 schematically depicts an overview of the soft exoskeleton according to the present invention according to a side and top view of a user wearing it, in which the anchorage elements of the transmission system are shown.
Figure 7 and Figure 8 schematically illustrate an overview of the soft exoskeleton according to a view of the anterior and front part of the arm and a view of the posterior part of the arm, respectively, in which some details of the soft suit are shown.
Figure 9 schematically illustrates a side view of the actuation system according to a specific embodiment of the present invention comprising an alternative gearbox mechanism with clutches.
Figure 10 schematically illustrates a top view of the actuation system according to said specific embodiment of the present invention comprising an alternative gearbox mechanism with clutches.
Figure 11 schematically illustrates an exploded-view drawing of the actuation system according to the specific embodiment illustrated in Figures 9 and 10.

### Detailed description of preferred embodiments

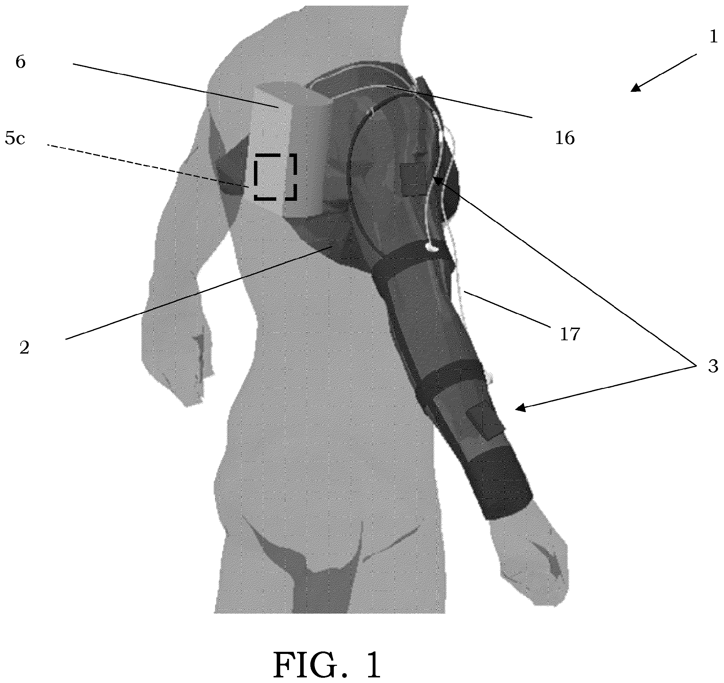

Figure 1 illustrates a soft exoskeleton 1 for assisting the movement of at least one limb of a user, in accordance with a preferred embodiment of the present invention.

Specifically, the limb in question is the right arm, which evidently is articulated in a proximal portion, that is the upper part of the arm and in a distal portion or the forearm connected through a joint, that is the elbow joint.

The embodiment of the soft exoskeleton 1 illustrated in Figure 1 is therefore suitable for to assisting the user in the movements of bending the shoulder joint and the elbow joint.

The soft exoskeleton 1 firstly comprises a soft suit 2, depicted as worn by the user on the right arm.

In general, the soft suit of the soft exoskeleton according to the present document may comprise a shirt made of fabric comprising an outer layer, e.g. made of neoprene, and an innermost layer, i.e. a liner suitable for being in direct contact with the user's skin, e.g. made of polyester.

In particular, the overall thickness of the fabric, i.e. of the outer layer and of the innermost layer, can be comprised between 1 mm and 2 mm, more particularly equal to about 1.5 mm, of which possibly 1 mm of outermost layer made of neoprene and 0.5 mm of innermost layer made of polyester.

The combination of the aforesaid materials allows for a greater comfort between the soft suit and the human skin, guaranteed by the polyester, and at the same time a greater resistance to the shear forces produced by the cables at the anchorage points thereof on the soft suit itself, guaranteed by the neoprene.

Thus, as illustrated in Figure 1, the soft exoskeleton 1 also comprises a plurality of sensors 3 configured to measure a movement of said at least one limb, in this case IMU sensors.

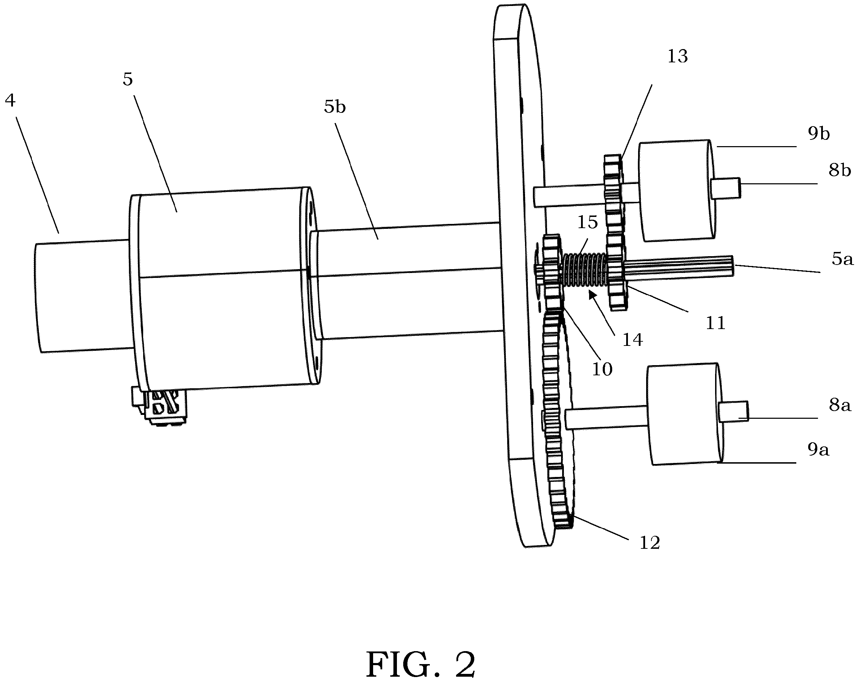

Furthermore, as better illustrated in Figure 2, the soft exoskeleton according to the present invention, as illustrate in Figure 1, comprises an encoder 4, preferably an absolute encoder, as well as an electric motor 5 and a planetary gearing 5b.

The electric motor 5 is powered by a battery, not shown, capable of powering the soft exoskeleton 1 itself.

The battery is also capable of powering a controller or control unit 5c, also included in the soft exoskeleton 1 illustrated, which in turn allows the operation of the motor 5 to be activated or not.

The control unit 5c comprises a microprocessor system and the electric motor driver, not represented. The control unit 5c is responsible for actuating the transmission system as a function of the feedback signals coming from the plurality of sensors 3.

The electric motor 5 in turn comprises a main transmission shaft 5a, called "main shaft" in the following.

With reference to Figure 1, the encoder 4, the battery, the electric motor 5, the main shaft 5a, the planetary gearing 5b, the control unit 5c and the entire actuation system are contained within an outer casing 6 and, therefore, are not visible from the outside.

The outer casing is made of a material with a low specific weight such as plastic and is intended to protect the components it contains from shocks, dust and dirt.

The transmission system comprises means for keeping said first cable 16 and said second cable 17 pre-tensioned (not illustrated).

Figure 2 therefore illustrates in detail the actuation system, which is included in the outer casing 6, not illustrated in this figure.

The actuation system is powered by the electric motor via the main shaft 5a, first of all comprising a first lateral shaft 8a and a second lateral shaft 8b.

The actuation system illustrated therein also comprises a first spool 9a rotatable in a first direction and in a second direction, connected to the first lateral shaft 8a in such a way to be rotated by said first lateral shaft 8a, as well as a second spool 9b rotatable in a first direction and in a second direction and connected to said second lateral shaft 8b in such a way to be rotated by said second lateral shaft 8b.

Then, the represented actuation system comprises:
- a first primary gearwheel 10 for motion transmission for supporting a first joint, i.e. the shoulder joint, and into which said main shaft 5a is inserted;
- a second primary gearwheel 11 for motion transmission for supporting a second joint, i.e. the elbow joint, and into which said main shaft 5a is inserted;
- a first secondary gearwheel 12 for motion transmission for supporting a first joint and constrained to rotate together with said first lateral shaft 8a, for example keyed to it, the first primary transmission gearwheel (10) being meshed with the first secondary transmission gearwheel (12);
- a second secondary gearwheel 13 for motion transmission for supporting a second joint and constrained to rotate with said second lateral shaft 8b, for example keyed to it, the second primary transmission gearwheel (11) being meshed with the second secondary transmission gearwheel (13).

In addition, the actuation system 1 of the soft exoskeleton illustrated comprises a gearbox mechanism 14.

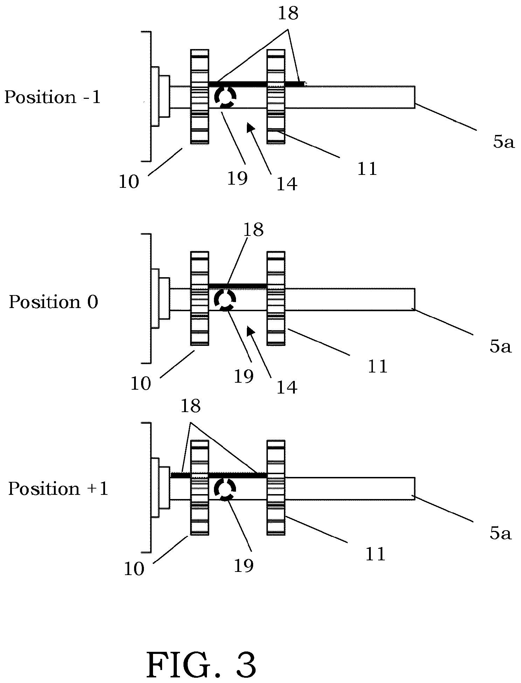

The gearbox mechanism 14, schematically represented in Figure 2 and more in detail in Figure 3, is adapted to allow motion transmission from said main shaft 5a to said first lateral shaft 8a, by the engagement of said first primary gearwheel 10 with said main shaft 5a, and/or motion transmission from said main shaft 5a to said second lateral shaft 8b, by the coupling of said second primary gearwheel 11 with said main shaft 5a.

As is more evident from Figure 3, the gearbox mechanism 14 comprises a pin 18, longitudinally and freely slidable on the main shaft 5a along a sliding path and adapted to allow motion transmission from the main shaft 5a to the first lateral shaft 8a, by the engagement of the first primary gearwheel 10 with the main shaft 5a, and/or motion transmission from the main shaft 5a to the second lateral shaft 8b, by the engagement of the second primary gearwheel 11 with the main shaft 5a.

The pin 18 is adapted to allow the first primary gearwheel 10 and/or the second primary gearwheel 11 to be engaged with the main shaft 5a for sliding the pin 18 itself on the main shaft 5a along the aforementioned sliding path.

As is evident from Figure 3, pin 18 has a length equal to at least the distance between the first primary gearwheel 10 and the second primary gearwheel 11.

The gearbox mechanism 14 further comprises an electromagnet 15, more precisely a solenoid, configured to be activated or deactivated by a command or a plurality of commands sent by the control unit 5c.

The solenoid 15 is in turn configured to exert an electromagnetic force on the pin 18.

The soft exoskeleton illustrated also comprises a transmission system, anchored to soft suit 2 and connected to the actuation system.

Returning to Figure 1, the transmission system first comprises a first cable 16 having a portion of the first cable, not illustrated, wound around the first rotatable spool 9a, the first cable 16 extending from the first rotatable spool 9a along said soft suit 2 and being able to assist the movement of bending said proximal portion of the limb, i.e. of the shoulder joint, when said first cable 16 is wound around the first rotatable spool 9a during the rotation of the first rotatable spool 9a in a first direction.

The transmission system of the present soft exoskeleton further comprises a second cable 17 having a portion of the second cable, not illustrated, wound around the second rotatable spool 9b, the second cable extending from the second rotatable spool 9b along said soft suit 2 and being able to assist the movement of bending said distal portion of the limb, i.e. of the elbow joint, when said second cable 17 is wound around the second rotatable spool 9b during the rotation of the second rotatable spool 9b in a first direction.

Figure 3 also illustrates an operating mode of the gearbox mechanism 14 of a preferred embodiment of the soft exoskeleton according to the present invention.

The gearbox mechanism 14 comprises the pin 18, longitudinally and freely slidable on the aforementioned main shaft 5a along a sliding path, and a polarity reverser 19.

The polarity reverser 19 is configured, by means of a circuit apparatus not illustrated because it is entirely conventional, the circuit apparatus being in connection with the electromagnet 15, to cause a reversal of the polarity of the electromagnetic force generated by the electromagnet 15.

As shown, the pin 18 may take the following positions along this sliding path:
- a first position, referred to as "position 0" in Figure 3, wherein the pin 18 allows the first primary gearwheel 10 and the second primary gearwheel 11 to be engaged with the main shaft 5a, the electromagnet being deactivated and not exerting an electromagnetic force on the pin 18;
- a second position, referred to as "position + 1" in Figure 3, wherein the pin 18 allows the first primary gearwheel 10 to be engaged with the main shaft 5a, the electromagnet being activated and exerting on the pin 18 an electromagnetic force with a first polarity, in this case, of positive sign; and
- a third position, referred to as "position -1" in Figure 3, wherein the pin 18 allows the second primary gearwheel 11 to be engaged with the main shaft 5a, the electromagnet being activated and exerting on the pin 18 an electromagnetic force with a polarity of opposite sign compared to said first polarity or, in this case, of negative sign.

In other words, by sliding on the main shaft 5a along the aforementioned sliding path and taking on the aforementioned three different positions, the pin 18 is configured to engage with the aforementioned first primary gearwheel 10 and/or with the aforementioned second primary gearwheel 11.

Specifically, by sliding on the main shaft 5a along the aforementioned sliding path and taking the aforementioned three different positions, the pin 18 is configured to engage with the aforementioned first primary gearwheel 10 and/or with the aforementioned second primary gearwheel 11 by crossing the same through respective first primary gearwheel recess and second secondary gearwheel recess, aligned along this sliding path (and not represented).

The soft exoskeleton 1 illustrated comprises a plurality of sensors 3 consisting of three IMU sensors.

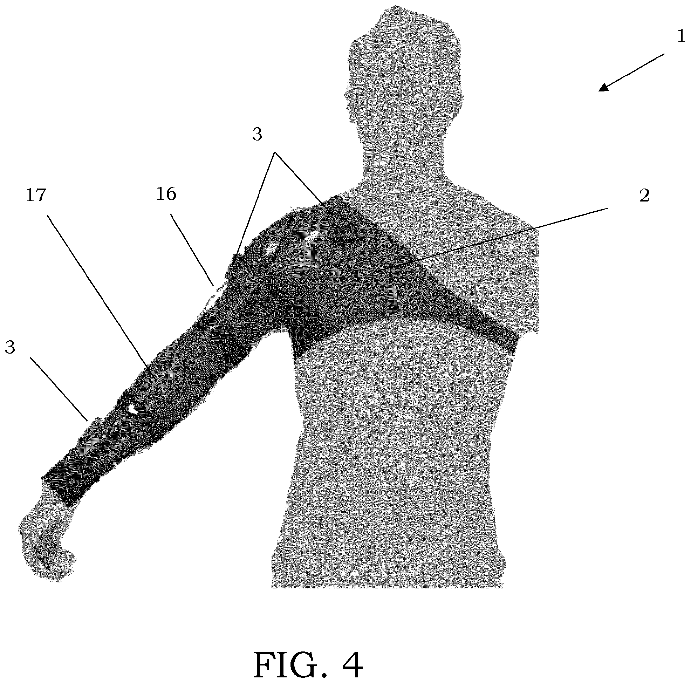

Figure 4 shows an overview of the soft exoskeleton 1 according to a front view thereof.

In particular, from Figure 4 it is possible to note the positioning on the soft suit 2 of the plurality of sensors 3 configured to measure a movement of such at least one limb.

As shown in Figure 4, the sensors 3 are positioned on the soft suit 2 at the following points where contact with the user is envisaged: at the chest in proximity to the collarbone, at the biceps in proximity to the counter mass thereof and at the forearm at wrist level.

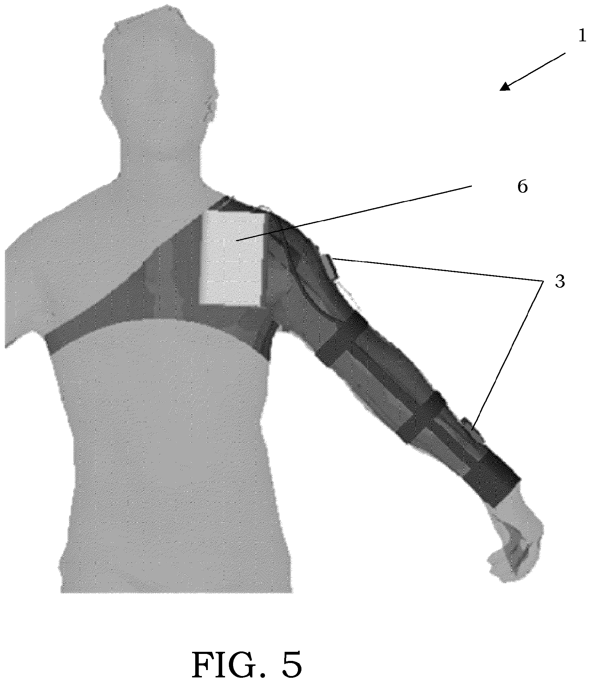

Figure 5 shows an overview of the soft exoskeleton 1 according to a rear view thereof, wherein two of the three aforementioned sensors 3 are shown: the sensor placed at the biceps in proximity to the countermass of the same and the sensor placed at the forearm at the wrist level.

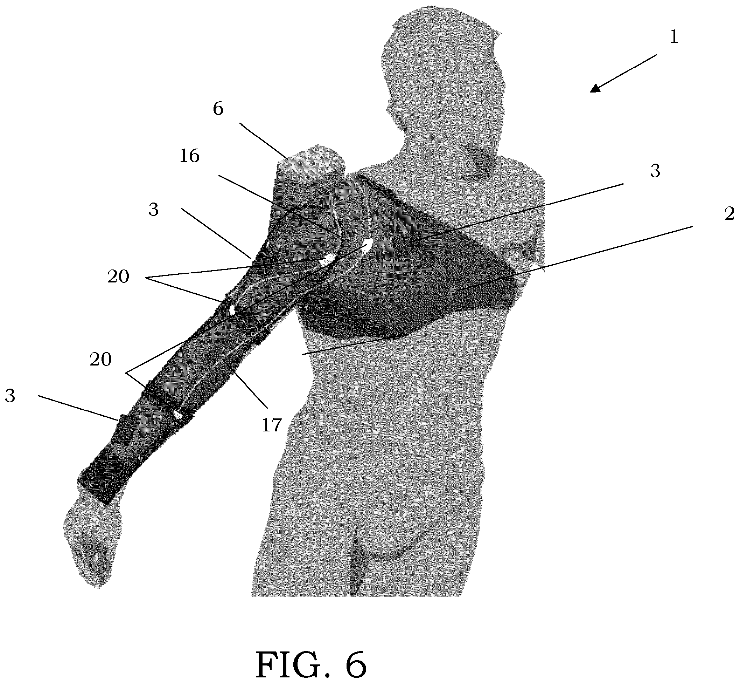

Figure 6 schematically represents an overview of the soft exoskeleton 1 according to a side view thereof and from above, in which the anchorage means 20 of the transmission system are shown.

In particular, as is evident, the first cable 16 is anchored to the soft suit 2 in such a way as to extend along the user's anterior deltoid and the second cable 17 is anchored to the soft suit 2 in such a way as to extend along the user's biceps brachii.

More particularly, the first cable 16 is arranged on the soft suit 2 in such a way as to follow the path of the tension line of the anterior deltoid.

Consistently, the second cable 17 is arranged on soft suit 2 in such a way as to follow the path of the tension line of the biceps brachii.

As is evident, the anchorage means 20 are fixed to the soft suit 2 in such a way that the first and second cables 16 and 17 can thus follow the path of the tension lines of the anterior deltoid and of the biceps brachii, respectively. The first cable 16 assists the movement of bending the shoulder, the second cable 17 assists the movement of bending the elbow.

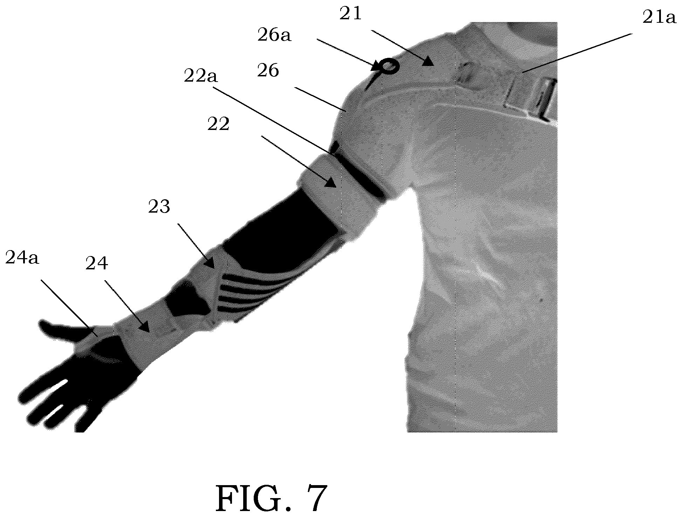

Figure 7 shows an overview of the soft exoskeleton 1 according to a view of the anterior and front part of the arm.

As is evident, the soft suit 2 comprises a shoulder brace 21, a first arm brace 22, suitable for being positioned at the upper part of the user's arm, a second arm brace 23, suitable for being positioned at the user's forearm, and a wrist brace 24, all the aforementioned braces made of neoprene.

The anchorage means 20 are suitably positioned on the shoulder brace 21, on the first arm brace 22 and on the second arm brace 23.

As illustrated in Figure 7, the shoulder brace 21 is suitable for being positioned around the shoulder of interest and comprises a shoulder brace band 21a suitable for wrapping the user's chest.

The first arm brace 22 is instead suitable for being positioned at the upper part of the user's arm or between the elbow and the shoulder.

Otherwise, the second arm brace 23 is suitable for being positioned at the user's forearm, that is between the wrist and elbow.

Finally, as shown, the wrist brace 24 comprises a wrist brace band 24a suitable for wrapping the thumb around the palm of the hand and the upper part of the thumb itself.

In addition, the shoulder brace 21, first arm brace 22, second arm brace 23 and wrist brace 24 comprise closing means, not shown, which are in the form of a hook and loop closing system (i.e. in a Velcro type locking system).

The soft suit 2 also comprises joining bands adapted to connect the shoulder brace 21, the first arm brace 22, the second arm brace 23 and the wrist brace 24.

The joining bands comprise adjustment means, said adjustment means being adapted to increase or decrease the distance between adjacent braces.

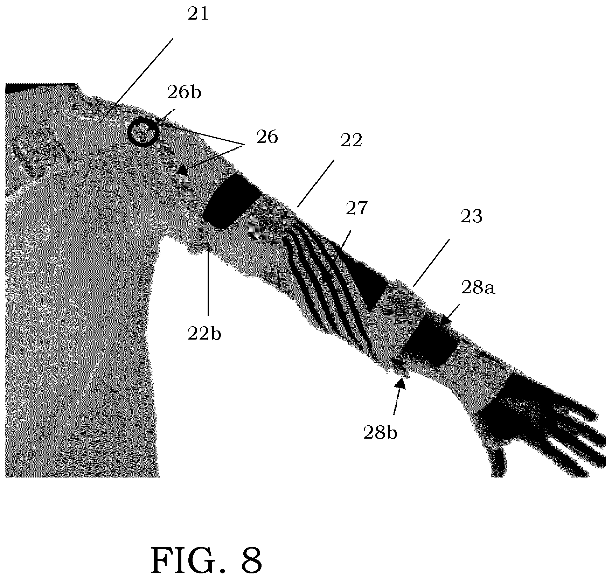

Specifically, as shown in Figure 8, the soft suit 2 comprises a joining band 26 adapted to connect the shoulder brace 21 and the first arm brace 22, a joining band 27 adapted to connect the first arm brace 22 and the second arm brace 23, as well as two joining bands 28a and 28b adapted to connect the second arm brace 23 and the wrist brace 24.

All the aforementioned joining bands are made of nylon.

The soft suit 2 further comprises adjustment means in the form of four plastic buckles, not illustrated.

The nylon joining bands 28a and 28b are placed between the second arm brace 23 and the wrist brace 24 so that such joining bands 28a and 28b can prevent the second arm brace 23 from slipping upwards.

The joining band 26, positioned between the shoulder brace 21 and the first arm brace 22, has a conformation similar to the joining bands 28a and 28b.

Thus, the simply connection of the shoulder brace 21 with the first arm brace 22 below at both the front part and the anterior part, as proposed in some prior art solutions, was not done, because during the bending of the shoulder the shoulder brace 21 and the first arm brace 22 below would have come closer and, therefore, the joining band 26 would no longer have been under tension and would not have allowed to oppose the slippage of the first arm brace 22, an undesirable situation.

To solve this problem, the joining band 26 has a pattern that follows the behaviour of the anatomical joint of the shoulder.

In particular, the joining band 26 has a first stitch 22a on the first arm brace 22 (in the front position) and ends in a second stitch 22b on the same arm brace 22 (in the rear position).

More specifically, the joining band 26 passes through two rings, a first ring 26a and a second ring 26b, arranged on the shoulder brace 21.

Such a solution makes it possible to follow the movement of bending the shoulder in such a way that the joining band 26 is always under tension and can counteract the slippage of the anchorage means.

Finally, the simple connection of the first arm brace 22 with the second arm brace 23 below at both the front part and the anterior part, as proposed in some prior art solutions, was not done, because during the bending of the elbow the upper arm brace and the lower arm brace below would have come closer and thus the joining band 27 would no longer have been under tension and would not have allowed to oppose the slippage of the second arm brace 23, an undesirable situation.

To solve this drawback, the joining band 27 has a pattern that follows the behaviour of the anatomical elbow joint, i.e. wrapping the anatomical joint of the elbow, in such a way that the joining band 27 is always tensioned.

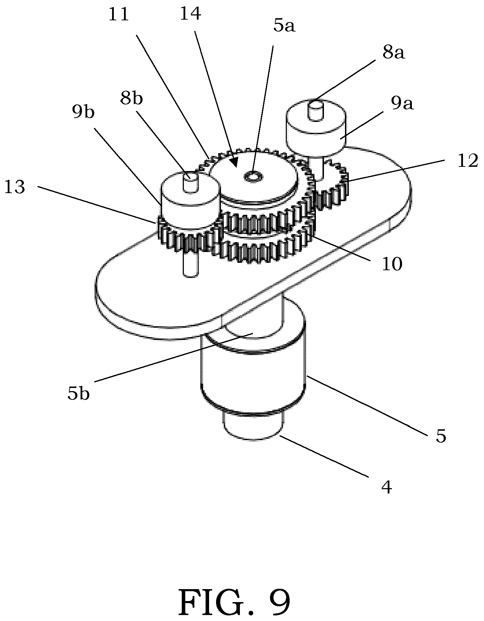

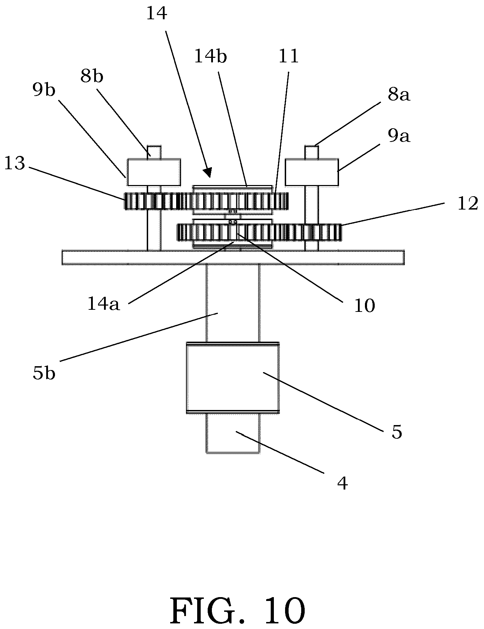

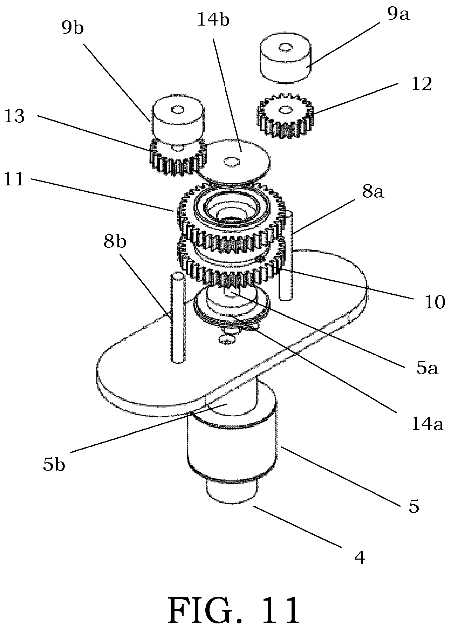

Figure 9, Figure 10 and Figure 11 illustrate an actuation system according to a specific embodiment of the present invention comprising an alternative gearbox mechanism.

According to this specific embodiment, the gearbox mechanism 14 comprises a first clutch 14a to allow the motion transmission from the main shaft 5a to the first lateral shaft 8a, by engagement of the first primary gearwheel 10 with the main shaft 5a, and a second clutch 14b to allow the motion transmission from the main shaft 5a to the second lateral shaft 8b, by engagement of the second primary gearwheel 11 with the main shaft 5a.

Specifically, the first clutch 14a and the second clutch 14b are electromagnetically actuated, wherein the first clutch 14a is adapted to transmit the motion of the main shaft 5a to the first lateral shaft 8a when is it electromagnetically activated and the second clutch 14b is adapted to transmit the motion of the main shaft 5a to the second lateral shaft 8b when it is electromagnetically activated.

The gearbox mechanism 14 can transmit the torque to the two lateral shafts 8a and 8b by means of the two clutches 14a and 14b, which can be electromagnetically actuated to transmit the motion of the main shaft 5a to the said first lateral shaft 8a (when the sole first clutch 14a is activated), to the said second lateral shaft 8b (when the sole second clutch 14b is activated) or to both the said first lateral shaft 8a and the second lateral shaft 8b (when both first 14a and second 14b clutches are activated).

In particular, the first clutch 14a and the second clutch 14b can be of the magnetorheological type.

The first clutch 14a comprises a first chamber, not illustrated, filled with a magnetic fluid and the second clutch 14b comprises a second chamber, not illustrated, filled with magnetic fluid.

According to the present invention, a magnetorheological clutch is a type of clutch in which the torque transmission from the main shaft 5a to the chamber of the clutch, into which the magnetic fluid is contained, thereby to the two lateral shafts 8a and 8b, may be obtained through a magnetic fluid and due to the friction of this fluid with the internal walls of the chamber and with specific thin circular plates (not illustrated), which are immersed into the fluid. By controlling the external magnetic field it is possible to change and adjust the friction and then change and adjust the torque which can be transmitted in a continuous way from the main shaft 5a to an output shaft, i.e. the two lateral shafts 8a and 8b.

As illustrated, the main shaft 5a is inserted in both the first primary gearwheel 10 and in the first clutch 14a, wherein the first primary gearwheel 10 is constrained to rotate with the first clutch 14a.

When the first clutch 14a is activated, the magnetic fluid comprised therein is magnetized and the torque may be transmitted from the main shaft 5a to the first lateral shaft 8a.

When the first clutch 14a is not activated, the magnetic fluid contained therein is not magnetized, the friction is very low and the torque is not transmitted from the main shaft 5a to the first lateral shaft 8a.

As illustrated, the main shaft 5a is inserted in both the second primary gearwheel 11 and in the second clutch 14b, wherein the second primary gearwheel 11 is constrained to rotate with the second clutch 14b.

When the second clutch 14b is activated, the magnetic fluid comprised therein is magnetized and the torque may be transmitted from the main shaft 5a to the second lateral shaft 8b.

When the second clutch 14b is not activated, the magnetic fluid comprised therein is not magnetized, the friction is very low and the torque is not transmitted from the main shaft 5a to the second lateral shaft 8b.

Advantageously, when the first clutch 14a and the second clutch 14b are of the magnetorheological type the torque transmission from the main shaft 5a to the first lateral shaft 8a and/or to the second lateral shaft 8b can be controlled in a continuous way.

More in particular, trough the control unit 5c, the torque transmitted from the main shaft 5a to the first lateral shaft 8a and/or to the second lateral shaft 8b can be continuously controlled and adjusted.

## Claims

1. A soft exoskeleton (1) for assisting the movement of at least one limb of a user, said at least one limb comprising a proximal portion and a distal portion which are connected by a joint, wherein said soft exoskeleton comprises
a soft suit (2), which can be worn by the user on said at least one limb,
a plurality of sensors (3), which is configured to measure a movement of said at least one limb,
an actuation system powered by an electric motor (5) and comprising
- said electric motor (5) comprising a main shaft (5a);
- a first lateral shaft (8a) and a second lateral shaft (8b);
- a first spool (9a), rotatable in a first direction and in a second direction, connected to said first lateral shaft (8a) in such a way as to be rotated by said first lateral shaft (8a);
- a second spool (9b), rotatable in a first direction and in a second direction and connected to said second lateral shaft (8b) in such a way as to be rotated by said second lateral shaft (8b);
- a first primary gearwheel (10) for motion transmission for supporting a first joint and into which said main shaft (5a) is inserted;
- a second primary gearwheel (11) for motion transmission for supporting a second joint and into which said main shaft (5a) is inserted;
- a first secondary gearwheel (12) for motion transmission for supporting a first joint and constrained to rotate together with said first lateral shaft (8a), said first primary gearwheel (10) being meshed with said first secondary transmission gearwheel (12);
- a second secondary gearwheel (13) for motion transmission for supporting a second joint and constrained to rotate together with said second lateral shaft (8b), said second primary gearwheel (11) being meshed with said second secondary gearwheel (13);
- a gearbox mechanism (14) adapted to allow, in an automatic way, motion transmission from said main shaft (5a) to said first lateral shaft (8a), by engagement of said first primary gearwheel (10) with said first secondary gearwheel (12), and/or motion transmission from said main shaft (5a) to said second lateral shaft (8b), by engagement of said second primary gearwheel (11) with said second secondary gearwheel (13) ;
and wherein said soft exoskeleton further comprises
a transmission system, anchored to said soft suit (2) and connected to said actuation system, comprising:
- a first cable (16) having a portion of the first cable wound around the first rotatable spool (9a), the first cable (16) extending from the first rotatable spool (9a) along said soft suit (2) and being adapted to assist the movement of bending said proximal portion of the limb when the first cable (16) is wound around the first rotatable spool (9a) during the rotation of the first rotatable spool (9a) in a first direction;
- a second cable (17) having a portion of the second cable wound around the second rotatable spool (9b), the second cable (17) extending from the second rotatable spool (9b) along said soft suit (2) and being adapted to assist the movement of bending of said distal portion of the limb when the second cable (17) is wound around the second rotatable spool (9b) during the rotation of the second rotatable spool (9b) in a first direction.

2. The soft exoskeleton (1) according to claim 1, wherein said at least one limb of the user is an upper limb.

3. The soft exoskeleton (1) according to claim 1 or 2, wherein said first cable (16) and said second cable (17) are Bowden cables.

4. The soft exoskeleton (1) according to any one of the preceding claims, said first cable (16) being anchored to said soft suit (2) by means of anchorage means (20), placed at least at one first anchorage point, and said second cable (17) being anchored to said soft suit (2) by anchorage means (20), placed at least at one second anchorage point, said at least one first anchorage point being in a position other than said at least one second anchorage point.

5. The soft exoskeleton (1) according to claim 4, wherein said first cable (16) is anchored to said soft suit (2) in such a way as to extend along the user's anterior deltoid and said second cable (17) is anchored to said soft suit (2) in such a way as to extend along the user's biceps brachii.

6. The soft exoskeleton (1) according to any one of the preceding claims, comprising a control unit (5c), said control unit (5c) being suitable for sending one command or a plurality of commands to said actuation system as a function of one signal or a plurality of signals coming from said plurality of sensors (3), said signal or plurality of signals concerning a movement of said at least one limb, preferably said control unit (5c) being configured to send said command and/or said plurality of commands to said electric motor (5) and/or to said gearbox mechanism (14).

7. The soft exoskeleton (1) according to any one of the preceding claims, wherein said gearbox mechanism (14) comprises at least one pin (18), which is longitudinally and freely slidable on said main shaft (5a) along a sliding path and being adapted to allow motion transmission from said main shaft (5a) to said first lateral shaft (8a) by engagement of said first primary gearwheel (10) with said main shaft (5a), and/or motion transmission from said main shaft (5a) to said second lateral shaft (8b) by engagement of said second primary gearwheel (11) with said main shaft (5a), preferably said pin (18) being adapted to allow the first primary gearwheel (10) and/or the second primary gearwheel (11) to be engaged with said main shaft (5a) as a result of said pin (18) sliding on said main shaft (5a) along said sliding path, more preferably said pin (18) having a length equal to at least the distance between the first primary gearwheel (10) and the second primary gearwheel (11).

8. The soft exoskeleton (1) according to claim 7, wherein said gearbox mechanism (14) comprises at least one electromagnet (15), configured to be activated or deactivated by said command or by said plurality of commands sent by said control unit (5c), said at least one electromagnet (15) being configured to exert an electromagnetic force on said pin (18).

9. The soft exoskeleton (1) according to claim 8, wherein said gearbox mechanism (14) comprises one polarity reverser (19), said polarity reverser (19) being configured to cause a reversal of the polarity of the electromagnetic force generated by the electromagnet (15), preferably said pin (18) being adapted to take the following positions along said sliding path:
- a first position, wherein said pin (18) allows the first primary gearwheel (10) and the second primary gearwheel (11) to be engaged with said main shaft (5a), the electromagnet (15) being deactivated and not exerting an electromagnetic force on the pin (18);
- a second position, wherein said pin (18) allows only the first primary gearwheel (10) to be engaged with said main shaft (5a), the electromagnet (15) being activated and exerting on the pin (18) an electromagnetic force with a first polarity; and
- a third position, wherein said pin (18) allows the second primary gearwheel (11) to be engaged with said main shaft (5a), the electromagnet (15) being activated and exerting on the pin (18) an electromagnetic force with a polarity of opposite sign compared to said first polarity.

10. The soft exoskeleton (1) according to any one of claims from 1 to 6, wherein said gearbox mechanism (14) comprises a first clutch (14a) to allow the motion transmission from said main shaft (5a) to said first lateral shaft (8a), by engagement of said first primary gearwheel (10) with said main shaft (5a), and second clutch (14b) to allow the motion transmission from said main shaft (5a) to said second lateral shaft (8b), by engagement of said second primary gearwheel (11) with said main shaft (5a).

11. The soft exoskeleton (1) according to claim 10, wherein said first clutch (14a) and said second clutch (14b) are electromagnetically actuated, said first clutch (14a) being adapted to transmit the motion of said main shaft (5a) to said first lateral shaft (8a) when is electromagnetically activated and said second clutch (14b) being adapted to transmit the motion of said main shaft (5a) to said second lateral shaft (8b) when is electromagnetically activated.

12. The soft exoskeleton (1) according to claim 11, wherein said first clutch (14a) and said second clutch (14b) are of the magnetorheological type.

13. The soft exoskeleton (1) according to any one of the preceding claims, comprising means for keeping said first cable (16) and said second cable (17) pre-tensioned.

14. The soft exoskeleton (1) according to any one of the preceding claims, wherein said plurality of sensors (3) is configured to measure a movement of said at least one limb comprises IMU sensors.

## Patentansprüche

1. Weiches Exoskelett (1) zur Unterstützung der Bewegung von mindestens einer Gliedmaße eines Nutzers, wobei die mindestens eine Gliedmaße einen proximalen Abschnitt und einen distalen Abschnitt umfasst, die mittels eines Gelenks verbunden sind, wobei das weiche Exoskelett Folgendes umfasst
einen weichen Anzug (2), der vom Nutzer auf der mindestens einen Gliedmaße getragen werden kann,
eine Vielzahl von Sensoren (3), die ausgelegt sind, um eine Bewegung der mindestens einen Gliedmaße zu messen,
ein Betätigungssystem, das durch einen Elektromotor (5) angetrieben wird und Folgendes umfasst
- den Elektromotor (5), umfassend eine Hauptwelle (5a);
- eine erste Seitenwelle (8a) und eine zweite Seitenwelle (8b);
- eine erste Rolle (9a), die in eine erste Richtung und eine zweite Richtung drehbar ist, verbunden mit der ersten Seitenwelle (8a), sodass sie durch die erste Seitenwelle (8a) gedreht wird;
- eine zweite Rolle (9b), die in eine erste Richtung und eine zweite Richtung drehbar und mit der zweiten Seitenwelle (8b) verbunden ist, sodass sie durch die zweite Seitenwelle (8b) gedreht wird;
- ein erstes Primärzahnrad (10) zur Bewegungsübertragung, um ein erstes Gelenk zu stützen, und in das die Hauptwelle (5a) eingefügt ist;
- ein zweites Primärzahnrad (11) zur Bewegungsübertragung, um ein zweites Gelenk zu stützen, und in das die Hauptwelle (5a) eingefügt ist;
- ein erstes Sekundärzahnrad (12) zur Bewegungsübertragung, um ein erstes Gelenk zu stützen, und das gezwungen ist, sich zusammen mit der ersten Seitenwelle (8a) zu drehen, wobei das erste Primärzahnrad (10) mit dem ersten Sekundärantriebszahnrad (12) verzahnt ist;
- ein zweites Sekundärzahnrad (13) zur Bewegungsübertragung, um ein zweites Gelenk zu stützen, und das gezwungen ist, sich zusammen mit der zweiten Seitenwelle (8b) zu drehen, wobei das zweite Primärzahnrad (11) mit dem zweiten Sekundärzahnrad (13) verzahnt ist;
- einen Getriebemechanismus (14), der dazu eingerichtet ist, die Bewegungsübertragung von der Hauptwelle (5a) auf die erste Seitenwelle (8a) automatisch durch den Eingriff des ersten Primärzahnrads (10) mit dem ersten Sekundärzahnrad (12) und/oder die Bewegungsübertragung von der Hauptwelle (5a) auf die zweite Seitenwelle (8b) durch den Eingriff des zweiten Primärzahnrads (11) mit dem zweiten Sekundärzahnrad (13) zu erlauben;
und wobei das weiche Exoskelett zudem ein Übertragungssystem umfasst, das am weichen Anzug (2) verankert und mit dem Betätigungssystem verbunden ist, umfassend:
- ein erstes Kabel (16), aufweisend einen Abschnitt des ersten Kabels, der rund um die erste drehbare Rolle (9a) gewunden ist, wobei sich das erste Kabel (16) von der ersten drehbaren Rolle (9a) entlang des weichen Anzugs (2) erstreckt und dazu eingerichtet ist, die Beugebewegung des proximalen Abschnitts der Gliedmaße zu unterstützen, wenn das erste Kabel (16) rund um die erste drehbare Rolle (9a) während der Drehung der ersten drehbaren Rolle (9a) in eine erste Richtung gewunden ist;
- ein zweites Kabel (17), aufweisend einen Abschnitt des zweiten Kabels, der rund um die zweite drehbare Rolle (9b) gewunden ist, wobei sich das zweite Kabel (17) von der zweiten drehbaren Rolle (9b) entlang des weichen Anzugs (2) erstreckt und dazu geeignet ist, die Beugebewegung des distalen Abschnitts der Gliedmaße zu unterstützen, wenn das zweite Kabel (17) rund um die zweite drehbare Rolle (9b) während der Drehung der zweiten drehbaren Rolle (9b) in eine erste Richtung gewunden ist.

2. Weiches Exoskelett (1) nach Anspruch 1, wobei die mindestens eine Gliedmaße des Nutzers eine obere Gliedmaße ist.

3. Weiches Exoskelett (1) nach Anspruch 1 oder 2, wobei das erste Kabel (16) und das zweite Kabel (17) Bowdenzüge sind.

4. Weiches Exoskelett (1) nach einem der vorhergehenden Ansprüche, wobei das erste Kabel (16) am weichen Anzug (2) mittels Verankerungsmitteln (20) verankert ist, die an mindestens einem ersten Verankerungspunkt platziert sind, und das zweite Kabel (17) am weichen Anzug (2) mittels Verankerungsmitteln (20) verankert ist, die an mindestens einem zweiten Verankerungspunkt platziert sind, wobei sich der mindestens eine erste Verankerungspunkt in einer anderen Position als der mindestens eine zweite Verankerungspunkt befindet.

5. Weiches Exoskelett (1) nach Anspruch 4, wobei das erste Kabel (16) am weichen Anzug (2) so verankert ist, das es sich entlang des vorderen Deltamuskels des Nutzers erstreckt, und das zweite Kabel (17) so am weichen Anzug (2) verankert ist, dass es sich entlang des Musculus biceps brachii des Nutzers erstreckt.

6. Weiches Exoskelett (1) nach einem der vorhergehenden Ansprüche, umfassend eine Steuereinheit (5c), wobei die Steuereinheit (5c) dazu geeignet ist, einen Befehl oder eine Vielzahl von Befehlen an das Betätigungssystem abhängig von einem Signal oder einer Vielzahl von Signalen, die von der Vielzahl von Sensoren (3) eingehen, zu senden, wobei das Signal oder die Vielzahl von Signalen eine Bewegung der mindestens einen Gliedmaße betreffen und die Steuereinheit (5c) vorzugsweise ausgelegt ist, um den Befehl und/oder die Vielzahl von Befehlen an den Elektromotor (5) und/oder den Getriebemechanismus (14) zu senden.

7. Weiches Exoskelett (1) nach einem der vorhergehenden Ansprüche, wobei der Getriebemechanismus (14) mindestens einen ersten Zapfen (18) umfasst, der längs und frei auf der Hauptwelle (5a) entlang eines Verschiebewegs verschiebbar und dazu eingerichtet ist, die Bewegungsübertragung von der Hauptwelle (5a) auf die erste Seitenwelle (8a) durch Eingriff des ersten Primärzahnrads (10) mit der Hauptwelle (5a) und/oder die Bewegungsübertragung von der Hauptwelle (5a) auf die zweite Seitenwelle (8b) durch Eingriff des zweiten Primärzahnrads (11) mit der Hauptwelle (5a) zu erlauben, wobei der Zapfen (18) vorzugsweise dazu eingerichtet ist, dem ersten Primärzahnrad (10) und/oder dem zweiten Primärzahnrad (11) zu erlauben, mit der Hauptwelle (5a) infolge des Verschiebens des Zapfens (18) auf der Hauptwelle (5a) entlang des Verschiebewegs in Eingriff zu gelangen, wobei der Zapfen (18) bevorzugter eine Länge gleich mindestens dem Abstand zwischen dem ersten Primärzahnrad (10) und dem zweiten Primärzahnrad (11) aufweist.

8. Weiches Exoskelett (1) nach Anspruch 7, wobei der Getriebemechanismus (14) mindestens einen Elektromagnet (15) umfasst, der ausgelegt ist, um durch den Befehl oder die Vielzahl von Befehlen, der/die von der Steuereinheit (5c) gesendet wird/werden, aktiviert oder deaktiviert zu werden, wobei der mindestens eine Elektromagnet (15) ausgelegt ist, um eine elektromagnetische Kraft auf den Zapfen (18) auszuüben.

9. Weiches Exoskelett (1) nach Anspruch 8, wobei der Getriebemechanismus (14) einen Polumschalter (19) umfasst, wobei der Polumschalter (19) ausgelegt ist, um eine Umkehrung der Polarität der durch den Elektromagnet (15) erzeugten elektromagnetischen Kraft zu bewirken, wobei der Zapfen (18) vorzugsweise ausgelegt ist, um die folgenden Positionen entlang des Verschiebewegs einzunehmen:
- eine erste Position, an der der Zapfen (18) dem ersten Primärzahnrad (10) und dem zweiten Primärzahnrad (11) erlaubt, mit der Hauptwelle (5a) in Eingriff zu gelangen, wobei der Elektromagnet (15) deaktiviert wird und keine elektromagnetische Kraft auf den Zapfen (18) ausübt;
- eine zweite Position, an der der Zapfen (18) nur dem ersten Primärzahnrad (10) erlaubt, mit der Hauptwelle (5a) in Eingriff zu gelangen, wobei der Elektromagnet (15) aktiviert wird und eine elektromagnetische Kraft mit einer ersten Polarität auf den ersten Zapfen (18) ausübt, und
- eine dritte Position, an der der Zapfen (18) dem zweiten Primärzahnrad (11) erlaubt, mit der Hauptwelle (5a) in Eingriff zu gelangen, wobei der Elektromagnet (15) aktiviert wird und eine elektromagnetische Kraft mit einer Polarität mit einem gegenüber der ersten Polarität entgegengesetzten Vorzeichen auf den ersten Zapfen (18) ausübt.

10. Weiches Exoskelett (1) nach einem der Ansprüche 1 bis 6, wobei der Getriebemechanismus (14) eine erste Kupplung (14a) umfasst, um die Bewegungsübertragung von der Hauptwelle (5a) auf die erste Seitenwelle (8a) durch Eingriff des ersten Primärzahnrads (10) mit der Hauptwelle (5a) zu erlauben, und eine zweite Kupplung (14b), um die Bewegungsübertragung von der Hauptwelle (5a) auf die zweite Seitenwelle (8b) durch Eingriff des zweiten Primärzahnrads (11) mit der Hauptwelle (5a) zu erlauben.

11. Weiches Exoskelett (1) nach Anspruch 10, wobei die erste Kupplung (14a) und die zweite Kupplung (14b) elektromagnetisch betätigt werden, die erste Kupplung (14a) dazu eingerichtet ist, die Bewegung der Hauptwelle (5a) auf die erste Seitenwelle (8a) zu übertragen, wenn sie elektromagnetisch aktiviert wird, und die zweite Kupplung (14b) eingerichtet ist, um die Bewegung der Hauptwelle (5a) auf die zweite Seitenwelle (8b) zu übertragen, wenn sie elektromagnetisch aktiviert wird.

12. Weiches Exoskelett (1) nach Anspruch 11, wobei die erste Kupplung (14a) und die zweite Kupplung (14b) vom magnetorheologischen Typ sind.

13. Weiches Exoskelett (1) nach einem der vorhergehenden Ansprüche, umfassend Mittel, um das erste Kabel (16) und das zweite Kabel (17) vorgespannt zu halten.

14. Weiches Exoskelett (1) nach einem der vorhergehenden Ansprüche, wobei die Vielzahl von Sensoren (3), die ausgelegt sind, um eine Bewegung von mindestens einer Gliedmaße zu messen, IMU-Sensoren umfasst.

## Revendications

1. Exosquelette souple (1) pour assister le mouvement d'au moins un membre d'un utilisateur, ledit au moins un membre comprenant une portion proximale et une portion distale qui sont reliées par une articulation, où ledit exosquelette souple comprend
une combinaison souple (2), qui peut être portée par l'utilisateur sur ledit au moins un membre,
une pluralité de capteurs (3), qui est configurée pour mesurer un mouvement dudit au moins un membre,
un système d'actionnement alimenté par un moteur électrique (5) et comprenant
- ledit moteur électrique (5) comprenant un arbre principal (5a) ;
- un premier arbre latéral (8a) et un second arbre latéral (8b) ;
- une première bobine (9a), rotative dans un premier sens et dans un second sens, reliée audit premier arbre latéral (8a) de manière à être entraînée en rotation par ledit premier arbre latéral (8a) ;
- une seconde bobine (9b), rotative dans un premier sens et dans un second sens et reliée audit second arbre latéral (8b) de manière à être entraînée en rotation par ledit second arbre latéral (8b) ;
- une première roue dentée primaire (10) pour la transmission de mouvement pour supporter un premier joint et dans laquelle ledit arbre principal (5a) est inséré ;
- une seconde roue dentée primaire (11) pour la transmission de mouvement pour supporter un second joint et dans laquelle ledit arbre principal (5a) est inséré ;
- une première roue dentée secondaire (12) pour la transmission de mouvement pour supporter une première articulation et contrainte de tourner avec ledit premier arbre latéral (8a), ladite première roue dentée primaire (10) étant en prise avec ladite première roue dentée de transmission secondaire (12) ;
- une seconde roue dentée secondaire (13) pour la transmission de mouvement pour supporter une seconde articulation et contrainte de tourner avec ledit second arbre latéral (8b), ladite seconde roue dentée primaire (11) étant en prise avec ladite seconde roue dentée secondaire (13) ;
- un mécanisme de boîte de vitesses (14) adapté pour permettre, de manière automatique, la transmission de mouvement dudit arbre principal (5a) audit premier arbre latéral (8a), par engagement dudit premier pignon primaire (10) avec ledit premier pignon secondaire (12), et/ou la transmission de mouvement dudit arbre principal (5a) audit second arbre latéral (8b), par engagement dudit second pignon primaire (11) avec ledit second pignon secondaire (13) ;
et où ledit exosquelette souple comprend en outre un système de transmission, ancré à ladite combinaison souple (2) et relié audit système d'actionnement, comprenant :
- un premier câble (16) ayant une portion du premier câble enroulée autour de la première bobine rotative (9a), le premier câble (16) s'étendant à partir de la première bobine rotative (9a) le long de ladite combinaison souple (2) et étant adapté pour assister le mouvement de flexion de ladite portion proximale du membre lorsque le premier câble (16) est enroulé autour de la première bobine rotative (9a) pendant la rotation de la première bobine rotative (9a) dans un premier sens ;
- un second câble (17) ayant une portion du second câble enroulée autour de la seconde bobine rotative (9b), le second câble (17) s'étendant à partir de la seconde bobine rotative (9b) le long de ladite combinaison souple (2) et étant adapté pour assister le mouvement de flexion de ladite portion distale du membre lorsque le second câble (17) est enroulé autour de la seconde bobine rotative (9b) pendant la rotation de la seconde bobine rotative (9b) dans une première direction.

2. Exosquelette souple (1) selon la revendication 1, dans lequel ledit au moins un membre de l'utilisateur est un membre supérieur.

3. Exosquelette souple (1) selon la revendication 1 ou 2, dans lequel ledit premier câble (16) et ledit second câble (17) sont des câbles Bowden.

4. Exosquelette souple (1) selon l'une quelconque des revendications précédentes, ledit premier câble (16) étant ancré à ladite combinaison souple (2) au moyen de moyens d'ancrage (20), placés au moins en un premier point d'ancrage, et ledit second câble (17) étant ancré à ladite combinaison souple (2) par des moyens d'ancrage (20), placés au moins en un second point d'ancrage, ledit au moins un premier point d'ancrage étant dans une position autre que ledit au moins un second point d'ancrage.

5. Exosquelette souple (1) selon la revendication 4, dans lequel ledit premier câble (16) est ancré à ladite combinaison souple (2) de manière à s'étendre le long du deltoïde antérieur de l'utilisateur et ledit second câble (17) est ancré à ladite combinaison souple (2) de manière à s'étendre le long du biceps brachial de l'utilisateur.

6. Exosquelette souple (1) selon l'une quelconque des revendications précédentes, comprenant une unité de commande (5c), ladite unité de commande (5c) étant appropriée pour envoyer une commande ou une pluralité de commandes audit système d'actionnement en fonction d'un signal ou d'une pluralité de signaux provenant de ladite pluralité de capteurs (3), ledit signal ou ladite pluralité de signaux concernant un mouvement dudit au moins un membre, de préférence ladite unité de commande (5c) étant configurée pour envoyer ladite commande et/ou ladite pluralité de commandes audit moteur électrique (5) et/ou audit mécanisme de boîte de vitesses (14).

7. Exosquelette souple (1) selon l'une quelconque des revendications précédentes, dans lequel ledit mécanisme de boîte de vitesses (14) comprend au moins une goupille (18), qui peut coulisser longitudinalement et librement sur ledit arbre principal (5a) le long d'un chemin de coulissement et qui est adaptée pour permettre une transmission de mouvement dudit arbre principal (5a) audit premier arbre latéral (8a) par engagement de ladite première roue dentée primaire (10) avec ledit arbre principal (5a), et/ou une transmission de mouvement dudit arbre principal (5a) audit second arbre latéral (8b) par engagement de ladite seconde roue dentée primaire (11) avec ledit arbre principal (5a), de préférence ladite goupille (18) étant adaptée pour permettre à la première roue dentée primaire (10) et/ou à la seconde roue dentée primaire ( 11) d'être engagée avec ledit arbre principal (5a) à la suite du coulissement de ladite goupille (18) sur ledit arbre principal (5a) le long dudit chemin de coulissement, plus préférablement ladite goupille (18) ayant une longueur égale au moins à la distance entre la première roue dentée primaire (10) et la seconde roue dentée primaire (11).

8. Exosquelette souple (1) selon la revendication 7, dans lequel ledit mécanisme de boîte de vitesses (14) comprend au moins un électroaimant (15), configuré pour être activé ou désactivé par ladite commande ou par ladite pluralité de commandes envoyées par ladite unité de commande (5c), ledit au moins un électroaimant (15) étant configuré pour exercer une force électromagnétique sur ladite goupille (18).

9. Exosquelette souple (1) selon la revendication 8, dans lequel ledit mécanisme de boîte de vitesses (14) comprend un inverseur de polarité (19), ledit inverseur de polarité (19) étant configuré pour provoquer une inversion de la polarité de la force électromagnétique générée par l'électroaimant (15), de préférence ladite goupille (18) étant adaptée pour prendre les positions suivantes le long dudit chemin de coulissement :
- une première position, dans laquelle ladite goupille (18) permet à la première roue dentée primaire (10) et à la seconde roue dentée primaire (11) d'être en prise avec ledit arbre principal (5a), l'électroaimant (15) étant désactivé et n'exerçant pas de force électromagnétique sur la goupille (18) ;
- une seconde position, dans laquelle ladite goupille (18) permet uniquement à la première roue dentée primaire (10) d'être engagée avec ledit arbre principal (5a), l'électroaimant (15) étant activé et exerçant sur la goupille (18) une force électromagnétique avec une première polarité ; et
- une troisième position, dans laquelle ladite goupille (18) permet à la seconde roue dentée primaire (11) d'être engagée avec ledit arbre principal (5a), l'électroaimant (15) étant activé et exerçant sur la goupille (18) une force électromagnétique avec une polarité de signe opposé par rapport à ladite première polarité.

10. Exosquelette souple (1) selon l'une quelconque des revendications 1 à 6, dans lequel ledit mécanisme de boîte de vitesses (14) comprend un premier embrayage (14a) pour permettre la transmission de mouvement dudit arbre principal (5a) audit premier arbre latéral (8a), par engagement de ladite première roue dentée primaire (10) avec ledit arbre principal (5a), et un second embrayage (14b) pour permettre la transmission de mouvement dudit arbre principal (5a) audit second arbre latéral (8b), par engagement de ladite seconde roue dentée primaire (11) avec ledit arbre principal (5a).

11. Exosquelette souple (1) selon la revendication 10, dans lequel ledit premier embrayage (14a) et ledit second embrayage (14b) sont actionnés de manière électromagnétique, ledit premier embrayage (14a) étant adapté pour transmettre le mouvement dudit arbre principal (5a) audit premier arbre latéral (8a) lorsqu'il est activé de manière électromagnétique et ledit second embrayage (14b) étant adapté pour transmettre le mouvement dudit arbre principal (5a) audit second arbre latéral (8b) lorsqu'il est activé de manière électromagnétique.

12. Exosquelette souple (1) selon la revendication 11, dans lequel ledit premier embrayage (14a) et ledit second embrayage (14b) sont du type magnétorhéologique.

13. Exosquelette souple (1) selon l'une quelconque des revendications précédentes, comprenant des moyens pour maintenir ledit premier câble (16) et ledit second câble (17) prétendus.

14. Exosquelette souple (1) selon l'une quelconque des revendications précédentes, dans lequel ladite pluralité de capteurs (3) est configurée pour mesurer un mouvement dudit au moins un membre et comprend des capteurs IMU.
